# EUROPÄISCHE PATENTSCHRIFT

(11) **EP 3 310 592 B1**
(45) Veröffentlichungstag und Bekanntmachung des Hinweises auf die Patenterteilung: **08.04.2020**
(21) Anmeldenummer: 16705790.0
(22) Anmeldetag: 23.02.2016
(51) Int. Cl.: B60C 11/13, B60C 11/03

(54) **FAHRZEUGLUFTREIFEN**
PNEUMATIC VEHICLE TYRE
PNEUMATIQUE DE VÉHICULE

(30) Priorität: 16.06.2015 DE 102015211013
(43) Veröffentlichungstag der Anmeldung: 25.04.2018
(73) Patentinhaber: Continental Reifen Deutschland GmbH, 30165 Hannover (DE)
(72) Erfinder: RITTWEGER, Stefan, 30826 Garbsen (DE); STADLER, Frank, 31275 Lehrte (DE); RÖGER, Bernhard, 30823 Garbsen (DE)
(74) Vertreter: Finger, Karsten
(86) Internationale Anmeldenummer: PCT/EP2016/053708
(87) Internationale Veröffentlichungsnummer: WO 2016/202472

(56) Entgegenhaltungen:
- EP-A2- 2 377 696
- DE-A1-102008 015 978
- DE-A1-102009 003 593
- DE-A1-102012 101 760

## Beschreibung

Die Erfindung betrifft einen Fahrzeugluftreifen mit einem Laufstreifen mit Profilpositiven, beispielsweise Profilblockreihen oder Profilbändern, welche voneinander durch eine Umfangsrille getrennt sind.

Es ist bekannt und üblich, für Winterreifen vorgesehene Laufstreifen mit Griffkanten zu versehen, um die Schneetraktion zu verbessern. Derartige Griffkanten werden meist durch schmale Einschnitte in den Profilblöcken sowie durch die Blockkanten der Profilblöcke selbst zur Verfügung gestellt.

Es ist ferner üblich, zur Verbesserung des Schneegriffs in Laufstreifen zick-zack-förmig verlaufende Umfangsrillen vorzusehen, welche Schnee im Vergleich zu gerade verlaufenden Umfangsrillen besser aufnehmen können und derart eine verbesserte Schnee/Schnee-Reibung bewirken. Laufstreifen mit zick-zack-förmigen Umfangsrillen weisen jedoch im Vergleich zu Laufstreifen mit gerade verlaufenden Umfangsrillen ein geringeres Wasserableitvermögen auf, sodass die Aquaplaningeigenschaften leiden.

Aus der DE 10 2008 015 978 A1 ist ein Fahrzeugluftreifen der eingangs genannten Art bekannt, welcher ein Reifen für einen SUV ist. Der Laufstreifen dieses Fahrzeugluftreifens weist schulterseitige Profilblockreihen und im mittleren Laufstreifenbereich verlaufende Profilbänder auf. Von einer ein Profilband begrenzenden Umfangsrille verlaufen in das Profilband Rillen, die innerhalb des Profilbandes enden. Diese Rillen sollen dazu beitragen, die Fahreigenschaften des Reifens in Spurrillen sowie auf trockner als auch auf nasser Fahrbahn zu verbessern.

Fahrzeugluftreifen mit Laufstreifen, welche dem Fahrzeugluftreifen eine gute Schneeperformance verleihen sollen, sind in unterschiedlichen Ausführungen bekannt. So ist beispielsweise aus der EP 2 261 064 A1 ein Reifen, welcher sowohl eine gute Schneeperformance als auch eine gute Lenkstabilität aufweisen soll, bekannt. Der Laufstreifen des Reifens weist beidseitig des Reifenäquators zick-zack-förmig verlaufende Umfangsrillen auf. Die Rillenflanken dieser Umfangsrillen sind in Draufsicht aus L-förmigen Abschnitten oder aus konvex zur Rillenmitte gekrümmten bogenförmigen Abschnitten zusammengesetzt. Der Laufstreifen weist ferner von den Umfangsrillen in Profilbänder hinein ragende Sacknuten auf.

Der aus der DE 10 2007 016 113 A1 bekannte Fahrzeugluftreifen weist einen Laufstreifen mit Profilblöcken auf, an deren Blockflanken Stufen ausgebildet sind. Diese Stufen sollen ein Verstopfen der Rillen mit Schlamm oder Schnee verhindern.

Aus der EP 2 377 696 A2 ist ein Fahrzeugluftreifen bekannt, welcher einen Laufstreifen mit durch Umfangsrillen voneinander getrennten Profilbändern aufweist. Die Profilbänder sind an einer Rillenflanke der Umfangsrille mit an den Rillengrund angrenzenden Aussparungen versehen, welche, im Querschnitt betrachtet, ringsegmentförmig ausgebildet sind. Die Schneetraktion und die Aquaplaningeigenschaften des Reifens sollen dadurch verbessert werden können.

Die DE 10 2009 003 593 A1 offenbart einen Fahrzeugluftreifen, dessen Laufstreifen Quer- bzw. Schrägrillen sowie Umfangsrillen aufweist. Im Bereich der Mündung der Quer- bzw. Schrägrille in die Umfangsrille ist ein in Draufsicht T-förmiger Vorsprung vorgesehen, welcher die Profilblockelemente aneinander anbindet und somit versteift. In den Querrillen soll dabei eine große Aufnahmekapazität für Matsch oder Schnee erhalten bleiben.

Der aus der EP 2 108 531 A2 bekannte Fahrzeugluftreifen weist einen Laufstreifen mit zumindest drei Umfangsrillen auf, wobei die Rillenflanken der Umfangsrillen über ihre Umfangserstreckung Abschnitte aufweisen, derart, dass in Umfangsrichtung abwechselnd ein Abschnitt, welcher gegenüber der Umfangsrichtung um 5° bis 20° geneigt ist, und ein Abschnitt, welcher gegenüber der Umfangsrichtung 0° bis 45° geneigt ist, vorgesehen sind.

Die bisher bekannten Fahrzeugluftreifen mit guten Schneegriffeigenschaften weisen im Allgemeinen Laufstreifen mit in Draufsicht zumindest abschnittsweise zick-zack- oder wellenförmig verlaufenden Umfangsrillen auf. Solche Umfangsrillen wirken sich allerdings, wie erwähnt, nachteilig auf das Wasserdrainagevermögen des Laufstreifens aus.

Die in Profilpositiven zur Verbesserung der Schneetraktion ausgebildeten Einschnitte bewirken meist eine Abnahme der Steifigkeit der Profilpositive in Umfangs- und Querrichtung, was sich nachteilig auf die Trockenhandlingeigenschaften des Reifens auswirken kann.

Der Erfindung liegt daher die Aufgabe zu Grunde, bei einem Reifen der eingangs genannten Art die zwischen einer guten Schneeperformance, insbesondere guten Schneegriffeigenschaften, und einem guten Wasserableitvermögen und zwischen einer guten Schneeperformance, insbesondere einer guten Schneetraktion, und guten Trockenhandlingeigenschaften bestehenden Zielkonflikte besser als bisher zu lösen.

Die gestellte Aufgabe wird erfindungsgemäß dadurch gelöst, dass Profilpositive mit entlang der Umfangsrille verlaufenden Aussparungen versehen sind, welche in radialer Richtung jeweils durch eine Bodenfläche begrenzt sind,
wobei jede Aussparung, bezogen auf eine Linie in Verlängerung der an der Laufstreifenoberfläche befindlichen Randkante der Umfangsrille, eine in axialer Richtung ermittelte maximale Breite, eine in Umfangsrichtung ermittelte Erstreckungslänge und eine in radialer Richtung ermittelte Tiefe aufweist, wobei die Erstreckungslänge zumindest dem Zweifachen der maximalen Breite entspricht und 15,0 mm bis 40,0 mm beträgt, wobei die Tiefe 25% bis 45% der Tiefe der Umfangsrille beträgt und wobei die Bodenfläche unter einem spitzen Winkel zur axialen Richtung verläuft, sodass die Aussparung mit zunehmender Entfernung von der Umfangsrille kontinuierlich tiefer wird.

In den gemäß der Erfindung vorgesehenen Aussparungen kann sich beim Fahren auf schneebedeckter Fahrbahn Schnee besonders gut ansammeln, wobei die Breite und die Erstreckungslänge der Aussparungen derart aufeinander abgestimmt sind, dass durch den erzielbaren Effekt der Schnee/Schnee-Reibung die Schneeperformance des Fahrzeugluftreifens deutlich verbessert wird. Die unter dem spitzen Winkel verlaufenden Bodenflächen tragen maßgeblich zur Aufnahme von Schnee in die Aussparungen bei. Die Umfangsrillen können als gerade in Umfangsrichtung verlaufende Rillen ausgeführt sein, sodass ein gutes Wasserdrainagevermögen gewährleistet ist. Die erfindungsgemäß vorgesehenen Aussparungen gestatten es, die Anzahl von Einschnitten in den Profilpositiven geringer zu halten, sodass auch gute Trockenhandlingeigenschaften sichergestellt werden können.

Bei bevorzugten Ausführungsformen der Erfindung beträgt die Erstreckungslänge der Aussparungen bis zu 30,0 mm, insbesondere 20,0 mm bis 30,0 mm, die Breite der Aussparungen 3,0 mm bis 7,0 mm und die Tiefe der Aussparungen 30 % bis 35 % der Tiefe der Umfangsrille. Auf diese Weise lässt sich die von den Aussparungen aufnehmbare Schneemenge zur Sicherstellung einer besonders guten Schnee/Schnee-Reibung optimieren.

Erfindungsgemäß beträgt der Winkel, unter welchem die Bodenflächen der Aussparungen zur axialen Richtung verlaufen, 15° bis 45°, insbesondere 20° bis 30°. Derart geneigte Bodenflächen können auf besonders effektive Weise die Aufnahme von Schnee in die Aussparungen unterstützen, helfen den Schnee in den Aussparungen zu verdichten und optimieren derart die Schneeverzahnung.

Dieser Effekt wird erfindungsgemäß bei einer weiteren Ausführungsform der Erfindung noch verbessert, indem die Bodenflächen jeweils einen Vorsprung begrenzen, welcher ein Stück, insbesondere 1,0 mm bis 2,0 mm, in die Umfangsrille hinein ragt.

Bei einer weiteren, besonders vorteilhaften Ausführung der Erfindung sind die Aussparungen jeweils im Bereich der Enden von in den Profilpositiven verlaufenden Querrillen ausgebildet, sodass zwischen den innerhalb der Profilpositive befindlichen Enden der Querrillen und den Aussparungen je ein Verbindungssteg ausgebildet sein kann, welcher sich in Verlängerung der Querrille erstreckt und sich in radialer Richtung auf einem niedrigeren Niveau befindet als die Außenfläche der Profilpositive. In die Bereichen oberhalb dieser Verbindungsstege kann aus den Aussparungen Schnee "hineingeschaufelt" werden, wodurch die Schnee/Schnee-Reibung noch weiter verbesserbar ist. In diesem Zusammenhang ist es daher günstig, wenn der Verbindungssteg jeweils im Wesentlichen niveaugleich mit der Bodenfläche in der betreffenden Aussparung verläuft.

Weitere Merkmale, Vorteile und Einzelheiten der Erfindung werden nun anhand der Zeichnung, die ein Ausführungsbeispiel der Erfindung darstellt, näher beschrieben. Dabei zeigen
Fig. 1 eine Draufsicht auf einen Ausschnitt eines Laufstreifens eines Fahrzeugluftreifens mit einer Ausführungsform gemäß der Erfindung und
Fig. 2 einen Schnitt entlang der Linie II-II der Fig. 1.

Erfindungsgemäß ausgeführte Fahrzeugluftreifen sind insbesondere Winterreifen für Personenkraftwagen, Vans oder Light-Trucks.

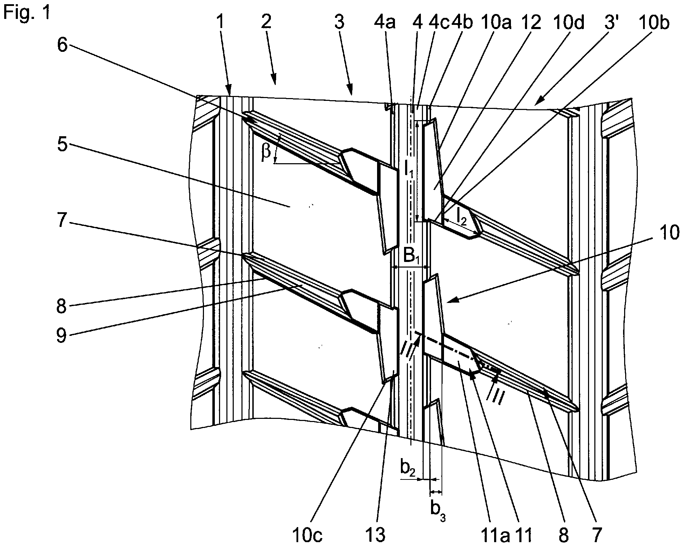

In Fig. 1 sind von einem Laufstreifen eines Fahrzeugluftreifens in Radialbauart ein beidseitig durch je eine Umfangsrille 1 begrenzter zentraler Laufstreifenbereich 2 und beidseitig an den zentralen Laufstreifenbereich 2 angrenzende weitere Profilbänder oder Profilblockreihen, von welchen lediglich Teilbereiche gezeigt sind, dargestellt.

Bei der dargestellten Ausführungsvariante weist der zentrale Laufstreifenbereich 2 zwei in Umfangsrichtung umlaufende Profilblockreihen 3, 3' auf, welche durch eine Umfangsrille 4 voneinander getrennt sind.

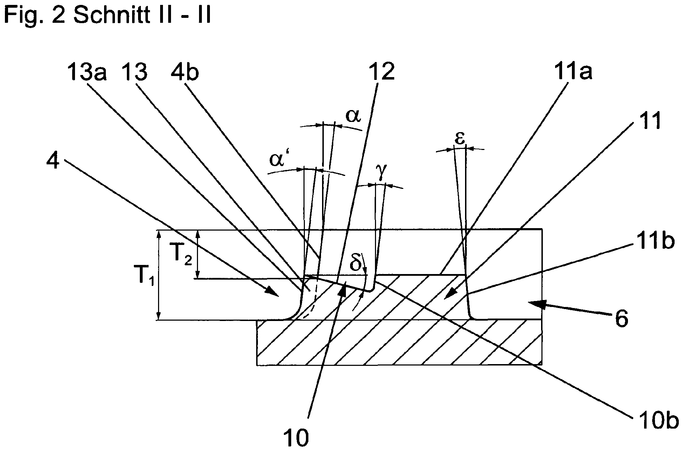

Die bei der gezeigten Ausführung im Wesentlichen gerade in Umfangsrichtung verlaufende Umfangsrille 4 weist Rillenflanken 4a, 4b und einen Rillengrund 4c auf. Die in radialer Richtung ermittelte Tiefe T₁ (Fig. 2) der Umfangsrille 4 beträgt insbesondere 7,0 mm bis 8,5 mm auf, wobei die Tiefe T₁ der für den jeweiligen Fahrzeugluftreifen vorgesehenen maximalen Profiltiefe entspricht. Die Rillenflanken 4a, 4b verlaufen jeweils unter einem kleinen spitzen Winkel α von bis zu 10° zur radialen Richtung (Fig. 2) oder alternativ in radialer Richtung. An der Laufstreifenoberfläche weist die Umfangsrille 4 eine Breite B₁ von vorzugsweise 8,0 mm bis 12,0 mm auf.

Jede Profilblockreihe 3, 3' setzt sich aus über den Umfang des Laufstreifens aufeinanderfolgenden Profilblöcken 5 zusammen. Zwischen in Umfangsrichtung benachbarten Profilblöcken 5 verläuft jeweils eine in einem Abstand vor der Umfangsrille 4 sacknutartig endende Querrille 6, welche jeweils in eine der Umfangsrillen 1 einmündet. Die Querrillen 6 verlaufen im Wesentlichen parallel zueinander und unter einem spitzen Winkel β von bis zu 45°, insbesondere von bis zu 35°, zur axialen Richtung und erstrecken sich beim gezeigten Ausführungsbeispiel geradlinig bzw. im Wesentlichen geradlinig. Anstelle von Profilblockreihen 3, 3' können auch Profilbänder ohne Querrillen 6 vorgesehen sein. In den Profilblöcken 5 können in ans ich bekannter Weise Einschnitte geringer Breite ausgebildet sein, die nicht dargestellt sind.

Bei der in Fig. 1 gezeigten Ausführungsvariante sind die beiden Profilblockreihen 3, 3' derart in Umfangsrichtung gegeneinander versetzt, dass die Querrillen 6 der einen Profilblockreihe 3 im Wesentlichen in Fortsetzung der Querrillen 6 aus der anderen Profilblockreihe 3' verlaufen. Jede Querrille 6 ist von einer Rillenflanke 7 und einer Rillenflanke 8 und einem Rillengrund 9 begrenzt, wobei die Rillenflanke 7 an dem einen und die Rillenflanke 8 an dem anderen von zwei in Umfangsrichtung benachbarten Profilblöcken 5 ausgebildet ist. Bezüglich der Umfangsrichtung befinden sich die Rillenflanken 7 in der einen Profilblockreihe 3 und die Rillenflanken 7 in der anderen Profilblockreihe 3' in gleichen Positionen. Analoges gilt für die Rillenflanken 8.

Die Profilblockreihen 3, 3' sind entlang der Umfangsrille 4 mit Aussparungen 10 versehen, wobei die Aussparungen 10 bei der gezeigten Ausführung jeweils beim laufstreifeninnenseitigen Ende jeder Querrille 6 ausgebildet sind. Bei der gezeigten Ausführungsvariante erstrecken sich die Aussparungen 10 in der einen Profilblockreihe 3 zu jenen in der anderen Profilblockreihe 3', vom Endbereich der jeweiligen Querrille 6 betrachtet, in entgegengesetzten Umfangsrichtungen.

Jede Aussparung 10 weist an der Laufstreifenoberfläche in Verlängerung der Randkante der Umfangsrille 4 eine Erstreckungslänge l₁ von 15 mm bis 40 mm, insbesondere bis zu 30 mm, vorzugsweise von 20 mm bis 30 mm, auf. Jede Aussparung 10 ist in radialer Richtung durch eine Bodenfläche 12 begrenzt, welche bei dem in Fig. 1 gezeigten Ausführungsbeispiel auch über einen Vorsprung 13, welcher ein Stück in die Umfangsrille 4 hineinragt, verläuft. Der Vorsprung 13 weist im Wesentlichen die Erstreckungslänge l₁ auf. In axialer Richtung - ermittelt von einer Linie in Verlängerung der an der Laufstreifenoberfläche befindlichen Randkante der Umfangsrille 4 - weist der Vorsprung 13 eine Breite b₂ von 1,0 mm bis 2,0 mm auf (Fig. 1). Der
Vorsprung 13 ist in der Umfangsrille 4 durch eine Flanke 13a (Fig. 2a) begrenzt, welche zur radialen Richtung unter einem spitzen Winkel α' von bis zu 10°, insbesondere von etwa 6°, verläuft.

Im Inneren der Profilblockreihen 3, 3' bzw. der Profilblöcke 5 ist jede Aussparung 10 von Begrenzungsflächen 10a, 10b, 10c, 10d begrenzt. Die Begrenzungsflächen 10a, 10b schließen aneinander an und begrenzen die Aussparung 10 innenseitig, wobei die Begrenzungsfläche 10a in Draufsicht in Umfangsrichtung bzw. unter einem kleinen spitzen Winkel von bis zu 5° zur Umfangsrichtung und die Begrenzungsfläche 10b in Draufsicht und wie in Fig. 1 gezeigt vorzugsweise in Umfangsrichtung verläuft. Zur radialen Richtung verläuft die Begrenzungsfläche 10a vorzugsweise unter einem Winkel von bis zu 10°. Die Begrenzungsfläche 10b verläuft zur radialen Richtung ebenfalls unter einem Winkel γ von bis zu 10°, insbesondere von etwa 6°, wobei der Winkel γ vorzugsweise gleich groß ist wie der Winkel α ist (Fig. 2). Die die Aussparung 10 in Umfangsrichtung begrenzenden, in Draufsicht im Wesentlichen in axialer Richtung verlaufenden Begrenzungsflächen 10c, 10d erstrecken sich in radialer Richtung analog zu den Begrenzungsflächen 10a, 10b.

Wie in Fig. 2 gezeigt ist, verläuft die Bodenfläche 12 unter einem spitzen Winkel δ von 15° bis 45°, insbesondere von 20° bis 40°, zur axialen Richtung, sodass die Aussparung 10 mit zunehmender Entfernung von der Umfangsrille 4 kontinuierlich tiefer wird. Die Aussparung 10 weist ferner eine an der Randkante der Umfangsrille 4 in radialer Richtung ermittelte Tiefe T₂ von 25% bis 45%, insbesondere 30% bis 35%, der Tiefe T₁ der Umfangsrille 4 auf. Die in axialer Richtung zwischen einer Linie in Verlängerung der an der Laufstreifenoberfläche befindlichen Randkante der Umfangsrille 4 und dem innenseitigen Ende der Bodenfläche 12 ermittelte maximale Breite b₃ der Aussparung 10 beträgt 3,0 mm bis 7,0 mm, wobei die Erstreckungslänge l₁ zumindest dem 2-Fachen, insbesondere zumindest dem 3-Fachen der Breite b₃ entspricht.

Bei der gezeigten Ausführungsvariante ist zwischen den innerhalb der Profilblockreihen 3, 3' befindlichen Enden der Querrillen 6 und der jeweiligen Aussparung 10 je ein Verbindungssteg 11 ausgebildet, welcher sich in Verlängerung der Querrille 6 erstreckt und zwei in Umfangsrichtung benachbarte Profilblöcke 5 aneinander anbindet. Der Verbindungssteg 11 befindet sich in radialer Richtung auf einem niedrigeren Niveau als die Außenfläche der Profilblöcke 5 und ist dort durch eine Deckfläche 11a, welche bei der gezeigten Ausführung zumindest im Wesentlichen parallel zur Laufstreifenoberfläche verläuft, begrenzt (Fig. 2). Der Verbindungssteg 11 weist in Richtung der Erstreckung der Querrillen 6 eine Länge l₂ von 5,0 mm bis 10,0 mm auf.

Die Deckfläche 11a des Verbindungsteges 11 ist bei der gezeigten Ausführungsvariante zumindest im Wesentlichen niveaugleich mit der Bodenfläche 12 der Aussparung 10. Der Verbindungssteg 11 ist zur Aussparung 10 durch die Begrenzungsfläche 10b und zur Querrille 6 durch eine Stegflanke 11b begrenzt. Die Stegflanke 11b verläuft zur radialen Richtung unter einem Winkel ε von bis zu 10°, insbesondere von etwa 5°.

Die Profilblöcke und Profilbänder können in an sich bekannter Weise mit Einschnitten versehen sein. Abweichend von der gezeigten Ausführungsvariante können die Aussparungen 10 auch in schulterseitig verlaufenden, beliebig ausgeführten Profilblockreihen bzw. Profilbändern entlang einer Umfangsrille ausgebildet sein.

### Bezugsziffernliste

- 1: Umfangsrille
- 2: Laufstreifenbereich
- 3, 3': Profilblockreihe
- 4: Umfangsrille
- 4a, 4b: Rillenflanke
- 4c: Rillengrund
- 5: Profilblock
- 6: Querrille
- 7, 8: Rillenflanke
- 9: Rillengrund
- 10: Aussparung
- 10a, 10b, 10c,: 10d Begrenzungsflächen
- 11: Verbindungssteg
- 11a: Deckfläche
- 11b: Stegflanke
- 12: Bodenfläche
- 13: Vorsprung
- α, α', β, γ, δ,: ε Winkel
- b₂, b₃: Breite
- B₁: Breite
- l₁, l₂: Erstreckungslänge
- T₁, T₂: Tiefe

## Patentansprüche

1. Fahrzeugluftreifen mit einem Laufstreifen mit Profilpositiven (3, 3'), beispielsweise Profilblockreihen oder Profilbändern, welche voneinander durch eine Umfangsrille (4) getrennt sind,
**dadurch gekennzeichnet,**
**dass** Profilpositive (3, 3') mit entlang der Umfangsrille (4) verlaufenden Aussparungen (10) versehen sind, welche in radialer Richtung jeweils durch eine Bodenfläche (12) begrenzt sind,
wobei jede Aussparung (10), bezogen auf eine Linie in Verlängerung der an der Laufstreifenoberfläche befindlichen Randkante der Umfangsrille (4), eine in axialer Richtung ermittelte maximale Breite (b₃), eine in Umfangsrichtung ermittelte Erstreckungslänge (l₁) und eine in radialer Richtung ermittelte Tiefe (T₂) aufweist, wobei die Erstreckungslänge (l₁) zumindest dem Zweifachen der maximalen Breite (b₃) entspricht und 15,0 mm bis 40,0 mm beträgt,
wobei die Tiefe (T₂) 25% bis 45% der Tiefe (T₁) der Umfangsrille (4) beträgt
und wobei die Bodenfläche (12) unter einem spitzen Winkel (δ) zur axialen Richtung verläuft, sodass die Aussparung (10) mit zunehmender Entfernung von der Umfangsrille (4) kontinuierlich tiefer wird.

2. Fahrzeugluftreifen nach Anspruch 1, **dadurch gekennzeichnet, dass** die Erstreckungslänge (l₁) der Aussparungen (10) bis zu 30,0 mm beträgt.

3. Fahrzeugluftreifen nach Anspruch 1 oder 2, **dadurch gekennzeichnet, dass** die Breite (b₃) der Aussparungen (10) 3,0 mm bis 7,0 mm beträgt.

4. Fahrzeugluftreifen nach einem der Ansprüche 1 bis 3, **dadurch gekennzeichnet, dass** die Tiefe (T₂) der Aussparungen (10) 30% bis 35% der Tiefe (T₁) der Umfangsrille (4) beträgt.

5. Fahrzeugluftreifen nach einem der Ansprüche 1 bis 4, **dadurch gekennzeichnet, dass** der Winkel (δ), unter welchem die Bodenflächen (12) der Aussparungen (10) zur axialen Richtung verlaufen, 15° bis 45°, insbesondere 20° bis 40°, beträgt.

6. Fahrzeugluftreifen nach einem der Ansprüche 1 bis 5, **dadurch gekennzeichnet, dass** die Bodenflächen (12) jeweils einen Vorsprung (13) begrenzen, welcher ein Stück in die Umfangsrille (4) hineinragt.

7. Fahrzeugluftreifen nach Anspruch 6, **dadurch gekennzeichnet, dass** der Vorsprung (13) eine in axialer Richtung ermittelte Breite (b₂) von 1,0 mm bis 2,0 mm aufweist.

8. Fahrzeugluftreifen nach einem der Ansprüche 1 bis 7, **dadurch gekennzeichnet, dass** die Aussparungen (10) jeweils im Bereich der Enden von in den Profilpositiven verlaufenden Querrillen (6) ausgebildet sind.

9. Fahrzeugluftreifen nach Anspruch 8, **dadurch gekennzeichnet, dass** zwischen den innerhalb der Profilpositive (3, 3') befindlichen Enden der Querrillen (6) und der jeweiligen Aussparung (10) je ein Verbindungssteg (11) ausgebildet ist, welcher sich in Verlängerung der Querrille (6) erstreckt und sich in radialer Richtung auf einem niedrigeren Niveau befindet als die Außenfläche der Profilpositive (3, 3').

10. Fahrzeugluftreifen nach Anspruch 9, **dadurch gekennzeichnet, dass** der Verbindungssteg (11) eine Erstreckungslänge (l₂) von 5,0 mm bis 10,0 mm aufweist.

11. Fahrzeugluftreifen nach Anspruch 9 oder 10, **dadurch gekennzeichnet, dass** der Verbindungssteg (11) im Wesentlichen niveaugleich mit der Bodenfläche (12) der Aussparung (10) verläuft.

## Claims

1. Pneumatic vehicle tyre having a tread with profile positives (3, 3'), for example rows of profile blocks or profile bands, which are separated from one another by a circumferential groove (4), **characterized**
**in that** profile positives (3, 3') are provided with clearances (10), which run along the circumferential groove (4) and are delimited in the radial direction in each case by a base area (12),
wherein, in relation to a line forming an extension of the peripheral edge, located on the tread surface, of the circumferential groove (4), each clearance (10) has a maximum width (b₃), determined in the axial direction, a length of extent (l₁), determined in the circumferential direction, and a depth (T₂), determined in the radial direction, wherein the length of extent (l₁) corresponds to at least twice the maximum width (b₃) and is 15.0 mm to 40.0 mm, wherein the depth (T₂) is 25% to 45% of the depth (T₁) of the circumferential groove (4)
and wherein the base area (12) runs at an acute angle (δ) in relation to the axial direction, such that the clearance (10) becomes continuously deeper with increasing distance from the circumferential groove (4) .

2. Pneumatic vehicle tyre according to Claim 1, **characterized in that** the length of extent (l₁) of the clearances (10) is up to 30.0 mm.

3. Pneumatic vehicle tyre according to Claim 1 or 2, **characterized in that** the width (b₃) of the clearances (10) is 3.0 mm to 7.0 mm.

4. Pneumatic vehicle tyre according to one of Claims 1 to 3, **characterized in that** the depth (T₂) of the clearances (10) is 30% to 35% of the depth (T₁) of the circumferential groove (4).

5. Pneumatic vehicle tyre according to one of Claims 1 to 4, **characterized in that** the angle (δ) at which the base areas (12) of the clearances (10) run in relation to the axial direction is 15° to 45°, in particular 20° to 40°.

6. Pneumatic vehicle tyre according to one of Claims 1 to 5, **characterized in that** the base areas (12) in each case delimit a projection (13), which protrudes a little in the circumferential direction (4).

7. Pneumatic vehicle tyre according to Claim 6, **characterized in that** the projection (13) has a width (b₂), determined in the axial direction, of 1.0 mm to 2.0 mm.

8. Pneumatic vehicle tyre according to one of Claims 1 to 7, **characterized in that** the clearances (10) are formed in each case in the region of the ends of transverse grooves (6) running on the profile positives.

9. Pneumatic vehicle tyre according to Claim 8, **characterized in that** between the ends of the transverse grooves (6) located within the profile positives (3, 3') and the respective clearance (10) there is formed in each case a connecting web (11), which extends as an extension of the transverse groove (6) and in the radial direction is located at a lower level than the outer surface of the profile positives (3, 3').

10. Pneumatic vehicle tyre according to Claim 9, **characterized in that** the connecting web (11) has a length of extent (l₂) of 5.0 mm to 10.0 mm.

11. Pneumatic vehicle tyre according to Claim 9 or 10, **characterized in that** the connecting web (11) runs substantially at the same level as the base area (12) of the clearance (10).

## Revendications

1. Pneumatique de véhicule comprenant une bande de roulement pourvue de profils en relief (3, 3'), par exemple de rangées de blocs de profil ou de bandes de profil, qui sont séparés les uns des autres par une rainure circonférentielle (4),
**caractérisé en ce que**
les profils en relief (3, 3') sont pourvus d'évidements (10) qui s'étendent le long de la rainure circonférentielle (4) et qui sont chacun délimités dans la direction radiale par une surface de fond (12), chaque évidement (10) a, par rapport à une ligne prolongeant le bord de la rainure circonférentielle (4) qui est situé sur la surface de bande de roulement, une largeur maximale (b₃) déterminée dans la direction axiale, une longueur d'extension (l₁) déterminée dans la direction circonférentielle et une profondeur (T₂) déterminée dans la direction radiale, la longueur d'extension (l₁) correspondant à au moins deux fois la largeur maximale (b₃) et étant de 15,0 mm à 40,0 mm,
la profondeur (T₂) étant de 25 % à 45 % de la profondeur (T₁) de la rainure circonférentielle (4),
et la surface de fond (12) s'étendant suivant un angle aigu (δ) par rapport à la direction axiale de sorte que l'évidement (10) devient de plus en plus profond à mesure que la distance à la rainure circonférentielle (4) augmente.

2. Pneumatique de véhicule selon la revendication 1, **caractérisé en ce que** la longueur d'extension (l₁) des évidements (10) peut atteindre 30,0 mm.

3. Pneumatique de véhicule selon la revendication 1 ou 2, **caractérisé en ce que** la largeur (b₃) des évidements (10) est de 3,0 mm à 7,0 mm.

4. Pneumatique de véhicule selon l'une des revendications 1 à 3, **caractérisé en ce que** la profondeur (T₂) des évidements (10) est de 30 % à 35 % de la profondeur (T₁) de la rainure circonférentielle (4) .

5. Pneumatique de véhicule selon l'une des revendications 1 à 4, **caractérisé en ce que** l'angle (δ), avec lequel les surfaces de fond (12) des évidements (10) s'étendent par rapport à la direction axiale, est compris entre 15° et 45°, notamment entre 20° et 40°.

6. Pneumatique de véhicule selon l'une des revendications 1 à 5, **caractérisé en ce que** les surfaces de fond (12) délimitent chacune une saillie (13) qui fait un peu saillie dans la rainure circonférentielle (4).

7. Pneumatique de véhicule selon la revendication 6, **caractérisé en ce que** la saillie (13) a une largeur (b₂), déterminée dans la direction axiale, de 1,0 mm à 2,0 mm.

8. Pneumatique de véhicule selon l'une des revendications 1 à 7, **caractérisé en ce que** les évidements (10) sont formés chacun au niveau des extrémités de rainures transversales (6) s'étendant dans les profils en relief.

9. Pneumatique de véhicule selon la revendication 8, **caractérisé en ce qu'**une nervure de liaison (11) est formée entre les extrémités des rainures transversales (6), situées à l'intérieur des profils en relief (3, 3'), et l'évidement respectif (10), laquelle nervure de liaison s'étend dans le prolongement de la rainure transversale (6) et se trouve à un niveau plus dans la direction radiale que la surface extérieure des profils en relief (3, 3').

10. Pneumatique de véhicule selon la revendication 9, **caractérisé en ce que** la nervure de liaison (11) a une longueur d'extension (l₂) de 5,0 mm à 10,0 mm.

11. Pneumatique de véhicule selon la revendication 9 ou 10, **caractérisé en ce que** la nervure de liaison (11) est sensiblement au même niveau que la surface de fond (12) de l'évidement (10).
